(19) **Europäisches Patentamt / European Patent Office / Office européen des brevets**

(11) **EP 3 822 905 B1**

(12) **EUROPEAN PATENT SPECIFICATION**

(45) Date of publication and mention of the grant of the patent:
**09.07.2025 Bulletin 2025/28**

(21) Application number: **19865012.9**

(22) Date of filing: **25.09.2019**

(51) International Patent Classification (IPC):
**G06Q 50/06** *(2024.01)* **H02J 3/00** *(2006.01)*

(52) Cooperative Patent Classification (CPC):
**G06Q 50/06; G06Q 10/04; H02J 3/003;**
H02J 2203/20; Y02E 60/00; Y04S 10/50;
Y04S 40/20

(86) International application number:
**PCT/CN2019/107946**

(87) International publication number:
**WO 2020/063689 (02.04.2020 Gazette 2020/14)**

(54) **METHOD AND DEVICE FOR PREDICTING THERMAL LOAD OF ELECTRICAL SYSTEM**

VERFAHREN UND VORRICHTUNG ZUR VORHERSAGE DER THERMISCHEN BELASTUNG EINES ELEKTRISCHEN SYSTEMS

PROCÉDÉ ET DISPOSITIF DE PRÉDICTION DE CHARGE THERMIQUE DE SYSTÈME ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.09.2018 CN 201811114080**

(43) Date of publication of application:
**19.05.2021 Bulletin 2021/20**

(73) Proprietor: **Ennew Digital Technology Co., Ltd.**
**Langfang, Hebei 065001 (CN)**

(72) Inventors:
• **HUANG, Xin**
**Langfang, Hebei 065001 (CN)**

• **LIU, Shengwei**
**Langfang, Hebei 065001 (CN)**

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(56) References cited:
CN-A- 106 845 663   CN-A- 107 842 908
CN-A- 108 229 754   CN-A- 108 426 354
CN-A- 109 214 948   US-A1- 2012 083 927
US-A1- 2013 085 616   US-A1- 2013 110 756

**Description**

TECHNICAL FIELD

The present disclosure relates to the field of data analysis technologies, and in particular, to a method and device for predicting thermal load of an electrical system.

BACKGROUND

Time sequences widely exist in people's daily life and industrial production, such as real-time trading data of funds or stocks, daily sales data of retail markets, sensor monitoring data of process industries, astronomical observation data, aerospace radar, satellite monitoring data, real-time weather temperatures, and air quality indexes. So far, many time-sequence analysis methods have been proposed in the industry, including a similarity query method, a classification method, a clustering method, a prediction method, an anomaly detection method, and the like. Many methods need to judge the similarity of time sequences. Therefore, a time-sequence similarity measurement method has a wide range of application requirements in the industry.

However, existing electrical system thermal load predictions are all algorithms that select a similar trend based on a single weather factor, which does not take into account factors affecting load changes in different time sections of the same load day. Thus, the accuracy of the thermal load predictions is affected.

Examples of prior art can be found in the US patent application 2012/083927A1, which describes an operation management apparatus includes an air conditioning thermal load prediction unit, a power generation output prediction processing unit, and an operation planning unit, where the operation management apparatus uses the historical data and the real time data for predicting the thermal load; and in another US application 2013/110756A1, which describes a method for forecasting short term power system load in a power supply system, where a support vector regression is used.

SUMMARY

Embodiments of the present disclosure provide a method and device for predicting thermal load of an electrical system, which predict, based on dynamic segmentation and an extreme learning machine (ELM) algorithm, a load trend in the next 24 hours, improving the accuracy of prediction.

In a first aspect, an embodiment of the present disclosure provides a method for predicting a change trend of a thermal load of an electrical system by predicting the thermal load of the electrical system in next 24 hours, the method including:

S1: pre-processing historical daily data of the thermal load of an electrical system;

S2: acquiring a data daily reference line according to the pre-processed historical daily data, taking a data mean of a preset number of days closest to a to-be-predicted day as the data daily reference line, wherein the preset number of days is N days with meteorological trend similarities between the to-be-predicted day and historical days ranking ahead, there are N pieces of historical data at a same moment, and the data mean is calculated for the same moment, and wherein N is greater than 3;

S3: dividing the acquired data daily reference line into multiple time sections, wherein the data daily reference line is divided into multiple time sections according to extreme points in the data daily reference line, wherein in a day, there are two maximum values and two minimum values; or according to points with a difference between slopes of two adjacent points greater than a preset threshold and extreme points in the data daily reference line;

S4: screening the historical daily data, and calculating a trend similarity value of the screened historical daily data and the data daily reference line within each divided time section respectively;

S5: choosing historical daily data corresponding to a trend similarity value greater than a preset reference value to form a similarity sequence matrix; and

S6: inputting the similarity sequence matrix into a constructed ELM for training, acquiring a prediction model, and using the prediction model to predict the change trend of the thermal load of the electrical system.

Preferably, a specific process of step S1 includes:
denoising, filling, and normalizing the historical daily data of the thermal load of the electrical system.

Preferably, a specific process of step S4 includes:

calculating similarity values of historical days and a to-be-predicted day, and selecting similar historical days corresponding to similarity values greater than a preset threshold; and

calculating a trend similarity value of similar historical daily data and the data daily reference line within each divided time section respectively.

In a second aspect, an embodiment of the present disclosure provides a device for predicting a change trend of a thermal load of an electrical system by predicting the thermal load of the electrical system in next 24 hours, the device including: a data processing module, a baseline determination module, a time segmentation module, a similarity calculation module, a sample screening module, and a training model module, wherein the data processing module is configured to pre-process historical daily data of the thermal load of an electrical system;

the baseline determination module is configured to acquire a data daily reference line according to the pre-processed historical daily data, and the baseline determination module is particularly configured to take a data mean of a preset number of days closest to a to-be-predicted day as the data daily reference line, wherein the preset number of days is N days with meteorological trend similarities between the to-be-predicted day and historical days ranking ahead, there are N pieces of historical data at a same moment, and the data mean is calculated for the same moment, and wherein N is greater than 3;

the time segmentation module is configured to divide the acquired data daily reference line into multiple time sections, wherein the time segmentation module is particularly configured to divide the data daily reference line into multiple time sections according to extreme points in the data daily reference line, wherein in a day, there are two maximum values and two minimum values; or according to points with a difference between slopes of two adjacent points greater than a preset threshold and extreme points in the data daily reference line;

the similarity calculation module is configured to screen the historical daily data, and calculate a trend similarity value of the screened historical daily data and the data daily reference line within each divided time section respectively;

the sample screening module is configured to choose historical daily data corresponding to a trend similarity value greater than a preset reference value to form a similarity sequence matrix; and

the training model module is configured to input the similarity sequence matrix into a constructed ELM for training, acquire a prediction model, and use the prediction model to predict the change trend of the thermal load of the electrical system.

Preferably, the data processing module is particularly configured to denoise, fill, and normalize the historical daily data of the thermal load of the electrical system.

Preferably, the similarity calculation module is particularly configured to calculate similarity values of historical days and a to-be-predicted day, select similar historical days corresponding to similarity values greater than a preset threshold, and calculate a trend similarity value of similar historical daily data and the data daily reference line within each divided time section respectively.

Compared with the prior art, the present disclosure has at least the following beneficial effects:

1. The present disclosure improves the accuracy of prediction.

2. The present disclosure effectively retains important change trend information in a time sequence of a thermal load by using a time sequence representation method based on trend segmentation, thereby being capable of more accurately predicting the change trend of the thermal load.

BRIEF DESCRIPTION OF THE DRAWINGS

In order to more clearly illustrate technical solutions in the embodiments of the present disclosure or in the prior art, the accompanying drawings used in the embodiments or the prior art are briefly introduced as follows. Apparently, the drawings described as follows are merely part of the embodiments of the present disclosure, other drawings can also be acquired by those of ordinary skilled in the art according to the drawings without paying creative efforts.

FIG. 1 is a flowchart of a method for predicting the thermal load of an electrical system according to an embodiment of the present disclosure; and
FIG. 2 is a block diagram of a device for predicting the thermal load of an electrical system according to an embodiment of the present disclosure.

DETAILED DESCRIPTION OF THE EMBODIMENTS

To make the objectives, technical solutions, and advantages of the embodiments of the present disclosure much clearer, the technical solutions in the embodiments of the present disclosure are described clearly and completely below with reference to drawings in the embodiments of the present disclosure. It is obvious that the embodiments to be described are only a part rather than all of the embodiments of the present disclosure. All other embodiments derived by those of ordinary skill in the art based on the embodiments of the present disclosure without paying creative efforts should fall within the protection scope of the present disclosure.

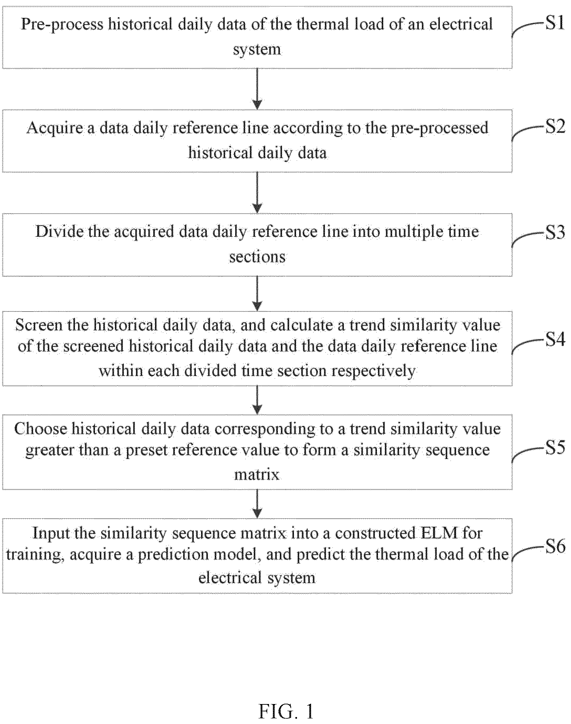

As shown in FIG. 1, an embodiment of the present disclosure provides a method for predicting a change trend of a thermal load of an electrical system by predicting the thermal load of the electrical system. The method may include the following steps:

S1: Pre-process historical daily data of the thermal load of an electrical system.
S2: Acquire a data daily reference line according to the pre-processed historical daily data.
S3: Divide the acquired data daily reference line into multiple time sections.
S4: Screen the historical daily data, and calculate a trend similarity value of the screened historical daily data and the data daily reference line within each divided time section respectively.
S5: Choose historical daily data corresponding to a trend similarity value greater than a preset reference value to form a similarity sequence matrix.
S6: Input the similarity sequence matrix into a constructed ELM for training, acquire a prediction model, and use the prediction model to predict the change trend of the thermal load of the electrical system.

In the embodiment, an ELM neural network is constructed. The network is divided into three layers: an input layer, a hidden layer, and an output layer. A learning process thereof does not need to adjust node parameters of the hidden layer, and feature mapping from the input layer to the hidden layer may be random or artificially given. The learning process thereof is easy to converge at a global minimum. For given N sets of training data, using an ELM to learn L hidden layers and M output layers includes the following steps: (1) Randomly assign node parameters: at the beginning of calculation, node parameters of SLFN may be randomly generated, that is, node parameters are independent from input data. Random generation here may follow any continuous probability distribution. (2) Calculate an output matrix of the hidden layer: a size of the output matrix of the hidden layer is N rows and M columns, that is, the number of rows is the number of input training data, and the number of columns is the number of nodes in the hidden layer. The output matrix is essentially a result of mapping N input data to L nodes. (3) Solve an output weight: a size of an output weight matrix of the hidden layer is L rows and M columns, that is, the number of rows is the number of nodes in the hidden layer, and the number of columns is the number of nodes in the output layer. Different from other algorithms, in an ELM algorithm, the output layer may (or is suggested to) have no error nodes. Therefore, when there is only one output variable, the output weight matrix is a vector. The core of the ELM algorithm is to solve an output weight to minimize an error function.

In this embodiment, the method has intelligent learning capability, and can improve the accuracy of prediction. The method effectively retains important change trend information in a time sequence of a thermal load by using a time sequence representation method based on trend segmentation, thereby being capable of more accurately predicting the change trend of the thermal load.

It is worth noting that all embodiments in this application are based on a particular assumption. The assumption includes assuming that historical real-time meteorological factors are known, such as hourly temperature and humidity; and assuming that to-be-predicted 24-hour meteorological factors are known (available from a weather platform).

In an embodiment of the present disclosure, a specific process of step S1 includes:
denoising, filling, and normalizing the historical daily data of the thermal load of the electrical system.

In this embodiment, preprocessing of historical daily data can improve the data accuracy and further ensure the accuracy of thermal load prediction.

In an embodiment of the present disclosure, a specific process of step S2 includes:
taking a data mean of a preset number of days closest to a to-be-predicted day as the data daily reference line.

In this embodiment, for time sequence data, relatively important influence points are generally local maximum and minimum points, while for short-term loads, a time point closer to a to-be-predicted day has a greater impact on the prediction, which is commonly known as the principle of "near big, far small." In this application, a data mean of a preset number of days closest to a to-be-predicted day is selected as the data daily reference line. For example, if the preset number of days is three, there may be three pieces of historical data at the same moment. If a mean value is calculated for the same moment, a reference value of the moment may be obtained. If all the moments are calculated, a data daily reference line of the data may be obtained. In addition, through data corresponding to N days with meteorological trend similarities between the to-be-predicted day and the historical days ranking ahead, a mean value thereof can also be obtained as the data daily reference line. The particular value of N may be determined according to an actual situation. For example, historical data of 10 days is now available, meteorological trend similarities between the 10 days and a to-be-predicted day are A, B, C, D, E, F, G, H, I, M, and P respectively, and A>B>C>D>E>F>G>H>I>M>P. If N is 3, selected data is data corresponding to A, B, and C.

In an embodiment of the present disclosure, a specific process of step S3 includes:
dividing the data daily reference line into multiple time sections according to extreme points in the data daily reference line.

In the embodiment, the data daily reference line is divided into multiple time sections through maximum and minimum values. For example, in a 24-hour period, there are two maximum values and two minimum values, and there are four key points, so the data daily reference line is divided into five sections.

In an embodiment of the present disclosure, a specific process of step S3 includes:

dividing the data daily reference line into multiple time sections according to according to points with a difference between slopes of two adjacent points greater than a preset threshold and extreme points in the data daily reference line.

In the embodiment, key points of the divided time sections are determined through maximum and minimum values, and the key points are corrected according to actual data. In addition, the key points may also be corrected according to professional knowledge. For example, a small peak of growth may occur between 16:00 and 18:00 in a service, and then the two points 16:00 and 18:00 may be taken as key points during segmentation.

In an embodiment of the present disclosure, a specific process of step S4 includes:

calculating similarity values of historical days and a to-be-predicted day, and selecting similar historical days corresponding to similarity values greater than a preset threshold; and

calculating a trend similarity value of similar historical daily data and the data daily reference line within each divided time section respectively.

In the embodiment, the trend similarity value may be calculated through the following formulas:

$$R_{XY} = \frac{2[E(XY) - E(X)E(Y)]}{D(X) + D(Y)} \; , \; X = (x_1, x_2, ..., x_n), Y = (y_1, y_2, ..., y_n)$$

where, $R_{XY}$ represents the trend similarity value, $E(XY)$ represents an expectation of XY, $E(X)$ represents an expectation of X, $E(Y)$ represents an expectation of Y, $D(X)$ represents variance of X, and $D(Y)$ represents variance of Y. X is the data daily reference line, and Y is the historical daily data.

In the embodiment, historical daily data corresponding to a trend similarity value greater than a preset reference value is chosen to form a similarity sequence matrix. The matrix may be:

$$c_{ij} = \begin{bmatrix} c_{11} & c_{12} & \cdots & c_{1j} \\ c_{21} & c_{22} & \cdots & c_{2j} \\ \vdots & \vdots & \vdots & \vdots \\ c_{i1} & c_{i2} & \cdots & c_{ij} \end{bmatrix}$$

where, $C_{ij}$ is the $j^{th}$ similarity sequence of the $i^{th}$ section in the divided time sections.

Here, the superiority of the present disclosure is verified by experiment. Thermal load predicted values of 30 days (24 hours a day, corresponding to a thermal load value per hour, and the time section is selected as 2018.06.01-2018.06.30) are selected as experimental data, in which data of 23 days is used as training set data, and data of the last 7 days is used as a test data set. A root mean square error (RMSE) and a mean absolute percentage error (MAPE) are selected as measurement indexes of experimental results.

Three algorithms are compared respectively:

(1) a simple weather similarity algorithm;
(2) a similar subsequence direct connection algorithm; and
(3) the algorithm of the present disclosure.

Description is provided by comparing RMSE and MAPE indexes of the three methods, and data is as follows:

RMSE:

$$RMSE = \sqrt{\frac{1}{n}\sum_{i=1}^{n}(y_d(i) - y_t(i))^2}$$

MAPE:

$$MAPE = \frac{1}{n}\sum_{i=1}^{n}|(y_d(i) - y_t(i))/y_t(i)| \times 100\%$$

where: $y_t$ represents a true value, $y_d$ represents a predicted value, and n represents a sample number.

Calculation results are as shown in Table 1 below:

Table 1

| Evaluation index | Algorithm as provided herein | Simple weather similarity algorithm | Similar subsequence direct connection algorithm |
|---|---|---|---|
| RMSE | 1.19 | 2.38 | 1.85 |
| MAPE | 3.38% | 6.11% | 4.52% |

Through the comparison of experimental data, it can be seen that the method proposed herein can achieve better effects in thermal load prediction.

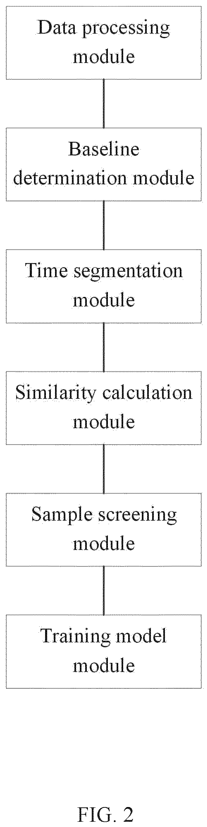

As shown in FIG. 2 , an embodiment of the present disclosure provides a device for predicting a change trend of a thermal load of an electrical system by predicting the thermal load of the electrical system, the device including: a data processing module, a baseline determination module, a time segmentation module, a similarity calculation module, a sample screening module, and a training model module, wherein

the data processing module is configured to pre-process historical daily data of the thermal load of an electrical system;
the baseline determination module is configured to acquire a data daily reference line according to the pre-processed historical daily data;
the time segmentation module is configured to divide the acquired data daily reference line into multiple time sections;
the similarity calculation module is configured to screen the historical daily data, and calculate a trend similarity value of the screened historical daily data and the data daily reference line within each divided time section respectively;
the sample screening module is configured to choose historical daily data corresponding to a trend similarity value greater than a preset reference value to form a similarity sequence matrix; and
the training model module is configured to input the similarity sequence matrix into a constructed ELM for training, acquire a prediction model, and use the prediction model to predict the change trend of the thermal load of the electrical system.

In the embodiment, an ELM neural network is constructed. The network is divided into three layers: an input layer, a hidden layer, and an output layer. A learning process thereof does not need to adjust node parameters of the hidden layer, and feature mapping from the input layer to the hidden layer may be random or artificially given. The learning process thereof is easy to converge at a global minimum. For given N sets of training data, using an ELM to learn L hidden layers and M output layers includes the following steps: (1) Randomly assign node parameters: at the beginning of calculation, node parameters of SLFN may be randomly generated, that is, node parameters are independent from input data. Random generation here may follow any continuous probability distribution. (2) Calculate an output matrix of the hidden layer: a size of the output matrix of the hidden layer is N rows and M columns, that is, the number of rows is the number of input training data, and the number of columns is the number of nodes in the hidden layer. The output matrix is essentially a result of mapping N input data to L nodes. (3) Solve an output weight: a size of an output weight matrix of the hidden layer is L rows and M columns, that is, the number of rows is the number of nodes in the hidden layer, and the number of columns is the number of nodes in the output layer. Different from other algorithms, in an ELM algorithm, the output layer may (or is suggested to) have no error nodes. Therefore, when there is only one output variable, the output weight matrix is a vector. The core of the ELM algorithm is to solve an output weight to minimize an error function.

In this embodiment, the device has intelligent learning capability, and can improve the accuracy of prediction. The device effectively retains important change trend information in a time sequence of a thermal load by using a time sequence representation method based on trend segmentation, thereby being capable of more accurately predicting the change trend of the thermal load.

It is worth noting that all embodiments in this application are based on a particular assumption. The assumption includes assuming that historical real-time meteorological factors are known, such as hourly temperature and humidity; and assuming that to-be-predicted 24-hour meteorological factors are known (available from a weather platform).

In an embodiment of the present disclosure, the data processing module is particularly configured to denoise, fill, and normalize the historical daily data of the thermal load of the electrical system.

In this embodiment, preprocessing of historical daily data can improve the data accuracy and further ensure the accuracy of thermal load prediction.

In an embodiment of the present disclosure, the baseline determination module is particularly configured to take a data mean of a preset number of days closest to a to-be-predicted day as the data daily reference line.

In this embodiment, for time sequence data, relatively important influence points are generally local maximum and minimum points, while for short-term loads, a time point closer to a to-be-predicted day has a greater impact on the prediction, which is commonly known as the principle of "near big, far small." In this application, a data mean of a preset number of days closest to a to-be-predicted day is selected as the data daily reference line. For example, if the preset number of days is three, there may be three pieces of historical data at the same moment. If a mean value is calculated for the same moment, a reference value of the moment may be obtained. If all the moments are calculated, a data daily reference line of the data may be obtained. In addition, through data corresponding to N days with meteorological trend similarities between the to-be-predicted day and the historical days ranking ahead, a mean value thereof can also be obtained as the data daily reference line. The particular value of N may be determined according to an actual situation. For example, historical data of 10 days is now available, meteorological trend similarities between the 10 days and a to-be-predicted day are A, B, C, D, E, F, G, H, I, M, and P respectively, and A>B>C>D>E>F>G>H>I>M>P. If N is 3, selected data is data corresponding to A, B, and C.

In an embodiment of the present disclosure, the time segmentation module is particularly configured to divide the data daily reference line into multiple time sections according to extreme points in the data daily reference line.

In the embodiment, the data daily reference line is divided into multiple time sections through maximum and minimum values. For example, in a 24-hour period, there are two maximum values and two minimum values, and there are four key points, so the data daily reference line is divided into five sections.

In an embodiment of the present disclosure, the time segmentation module is particularly configured to divide the data daily reference line into multiple time sections according to according to points with a difference between slopes of two adjacent points greater than a preset threshold and extreme points in the data daily reference line.

In the embodiment, key points of the divided time sections are determined through maximum and minimum values, and the key points are corrected according to actual data. In addition, the key points may also be corrected according to professional knowledge. For example, a small peak of growth may occur between 16:00 and 18:00 in a service, and then the two points 16:00 and 18:00 may be taken as key points during segmentation.

In an embodiment of the present disclosure, the similarity calculation module is particularly configured to calculate similarity values of historical days and a to-be-predicted day, select similar historical days corresponding to similarity values greater than a preset threshold, and calculate a trend similarity value of similar historical daily data and the data daily reference line within each divided time section respectively.

In the embodiment, the trend similarity value may be calculated through the following formulas:

$$R_{XY} = \frac{2[E(XY) - E(X)E(Y)]}{D(X) + D(Y)} , \quad X = (x_1, x_2, ..., x_n), Y = (y_1, y_2, ..., y_n)$$

where, RXY represents the trend similarity value, E(XY) represents an expectation of XY, E(X) represents an expectation of X, E(Y) represents an expectation of Y, D(X) represents variance of X, and D(Y) represents variance of Y. X is the data daily reference line, and Y is the historical daily data.

In the embodiment, historical daily data corresponding to a trend similarity value greater than a preset reference value is chosen to form a similarity sequence matrix. The matrix may be:

$$c_{ij} = \begin{bmatrix} c_{11} & c_{12} & \cdots & c_{1j} \\ c_{21} & c_{22} & \cdots & c_{2j} \\ \vdots & \vdots & \vdots & \vdots \\ c_{i1} & c_{i2} & \cdots & c_{ij} \end{bmatrix}$$

where, $c_{ij}$ is the $j^{th}$ similarity sequence of the $i^{th}$ section in the divided time sections.

Here, the superiority of the present disclosure is verified by experiment. Thermal load predicted values of 30 days (24 hours a day, corresponding to a thermal load value per hour, and the time section is selected as 2018.06.01-2018.06.30) are selected as experimental data, in which data of 23 days is used as training set data, and data of the last 7 days is used as a test data set. A root mean square error (RMSE) and a mean absolute percentage error (MAPE) are selected as measurement indexes of experimental results.

Three algorithms are compared respectively:

(1) a simple weather similarity algorithm;
(2) a similar subsequence direct connection algorithm; and
(3) the algorithm of the present disclosure.

Description is provided by comparing RMSE and MAPE indexes of the three methods, and data is as follows:
RMSE:

$$RMSE = \sqrt{\frac{1}{n} \sum_{i=1}^{n} (y_d(i) - y_t(i))^2}$$

MAPE:

$$MAPE = \frac{1}{n} \sum_{i=1}^{n} |(y_d(i) - y_t(i))/y_t(i)| \times 100\%$$

where: $y_t$ represents a true value, $y_d$ represents a predicted value, and n represents a sample number.

Calculation results are as shown in Table 1 below:

Table 1

| Evaluation index | Algorithm as provided herein | Simple weather similarity algorithm | Similar subsequence direct connection algorithm |
|---|---|---|---|
| RMSE | 1.19 | 2.38 | 1.85 |
| MAPE | 3.38% | 6.11% | 4.52% |

Through the comparison of experimental data, it can be seen that the method proposed herein can achieve better effects in thermal load prediction.

Contents such as information exchange and execution process among the modules in the device are based on the same conception as the embodiment of the method of the present disclosure. Specific contents can be obtained with reference to the description in the embodiment of the method of the present disclosure, and are not described in detail here.

It should be noted that, herein, the relation terms such as first and second are merely used to distinguish one entity or operation from another entity or operation, and do not require or imply that the entities or operations have this actual relation or order. Moreover, the terms "include," "comprise" or other variations thereof are intended to cover non-exclusive inclusion, so that a process, method, item or device including a series of elements not only includes the elements, but also includes other elements not clearly listed, or further includes elements inherent to the process, method, item or device. In the absence of more limitations, an element defined by the statement "including a/an..." does not exclude that the process, method, item or device including the element further has other identical elements.

Those of ordinary skill in the art should understand that all or a part of the steps of the method embodiment can be implemented by a program instructing relevant hardware. The program may be stored in a computer-readable storage medium. When the program is executed, the steps of the method embodiment are performed. The storage medium may be various media that can store program code, such as a ROM, a RAM, a magnetic disk, and an optical disk.

**Claims**

1. A method for predicting a change trend of a thermal load of an electrical system by predicting the thermal load of the electrical system in next 24 hours, wherein the method comprises:

   S1: pre-processing historical daily data of the thermal load of an electrical system;
   S2: acquiring a data daily reference line according to the pre-processed historical daily data, taking a data mean of a preset number of days closest to a to-be-predicted day as the data daily reference line, wherein the preset number of days is N days with meteorological trend similarities between the to-be-predicted day and historical days ranking ahead, there are N pieces of historical data at a same moment, and the data mean is calculated for the same moment, and wherein N is greater than 3;
   S3: dividing the acquired data daily reference line into multiple time sections, wherein the data daily reference line is divided into multiple time sections according to extreme points in the data daily reference line, wherein in a day, there are two maximum values and two minimum values; or according to points with a difference between slopes of two adjacent points greater than a preset threshold and extreme points in the data daily reference line;
   S4: screening the historical daily data, and calculating a trend similarity value of the screened historical daily data and the data daily reference line within each divided time section respectively;
   S5: choosing historical daily data corresponding to a trend similarity value greater than a preset reference value to form a similarity sequence matrix; and
   S6: inputting the similarity sequence matrix into a constructed extreme learning machine (ELM) for training, acquiring a prediction model, and using the prediction model to predict the change trend of the thermal load of the electrical system.

2. The method according to claim 1, wherein a specific process of step S1 comprises:
   denoising, filling, and normalizing the historical daily data of the thermal load of the electrical system.

3. The method according to claim 1, wherein a specific process of step S4 comprises:

   calculating similarity values of historical days and a to-be-predicted day, and selecting similar historical days corresponding to similarity values greater than a preset threshold; and
   calculating a trend similarity value of similar historical daily data and the data daily reference line within each divided time section respectively.

4. A device for predicting a change trend of a thermal load of an electrical system by predicting the thermal load of the electrical system in next 24 hours, wherein the device comprises: a data processing module, a baseline determination module, a time segmentation module, a similarity calculation module, a sample screening module, and a training model module, wherein

   the data processing module is configured to pre-process historical daily data of the thermal load of an electrical system;
   the baseline determination module is configured to acquire a data daily reference line according to the pre-processed historical daily data, and the baseline determination module is particularly configured to take a data mean of a preset number of days closest to a to-be-predicted day as the data daily reference line, wherein the preset number of days is N days with meteorological trend similarities between the to-be-predicted day and historical days ranking ahead, there are N pieces of historical data at a same moment, and the data mean is calculated for the same moment, and wherein N is greater than 3;
   the time segmentation module is configured to divide the acquired data daily reference line into multiple time sections, wherein the time segmentation module is particularly configured to divide the data daily reference line into multiple time sections according to extreme points in the data daily reference line, wherein in a day, there are two maximum values and two minimum values; or according to points with a difference between slopes of two adjacent points greater than a preset threshold and extreme points in the data daily reference line;

the similarity calculation module is configured to screen the historical daily data, and calculate a trend similarity value of the screened historical daily data and the data daily reference line within each divided time section respectively;

the sample screening module is configured to choose historical daily data corresponding to a trend similarity value greater than a preset reference value to form a similarity sequence matrix; and

the training model module is configured to input the similarity sequence matrix into a constructed extreme learning machine (ELM) for training, acquire a prediction model, and use the prediction model to predict the change trend of the thermal load of the electrical system.

5. The device according to claim 4, wherein the data processing module is particularly configured to denoise, fill, and normalize the historical daily data of the thermal load of the electrical system.

6. The device according to claim 4, wherein the similarity calculation module is particularly configured to calculate similarity values of historical days and a to-be-predicted day, select similar historical days corresponding to similarity values greater than a preset threshold, and calculate a trend similarity value of similar historical daily data and the data daily reference line within each divided time section respectively.

**Patentansprüche**

1. Verfahren zur Vorhersage eines Änderungstrends einer thermischen Belastung eines elektrischen Systems durch Vorhersage der thermischen Belastung des elektrischen Systems in den nächsten 24 Stunden, wobei das Verfahren Folgendes umfasst:

S1: Vorverarbeiten historischer Tagesdaten der thermischen Belastung eines elektrischen Systems;

S2: Erfassen einer Daten-Tagesreferenzlinie gemäß den vorverarbeiteten historischen Tagesdaten, indem ein Datenmittelwert einer voreingestellten Anzahl von Tagen, die einem vorherzusagenden Tag am nächsten liegen, als Daten-Tagesreferenzlinie herangezogen wird, wobei die voreingestellte Anzahl von Tagen N Tage mit meteorologischen Trendähnlichkeiten zwischen dem vorherzusagenden Tag und den vorausliegenden historischen Tagen ist, N historische Daten zum selben Zeitpunkt vorliegen und der Datenmittelwert für denselben Moment berechnet wird, und wobei N größer als 3 ist;

S3: Teilen der erfassten Daten-Tagesreferenzlinie in mehrere Zeitabschnitte, wobei die Daten-Tagesreferenzlinie in mehrere Zeitabschnitte nach Endpunkten in der Daten-Tagesreferenzlinie geteilt wird, wobei an einem Tag zwei Höchstwerte und zwei Mindestwerte vorliegen, oder nach Punkten mit einer Differenz zwischen Steigungen von zwei benachbarten Punkten größer als ein voreingestellter Schwellenwert und Endpunkten in der Daten-Tagesreferenzlinie;

S4: Selektieren der historischen Tagesdaten und Berechnen eines Trendähnlichkeitswerts der selektierten historischen Tagesdaten und der Daten-Tagesreferenzlinie jeweils innerhalb eines jeden geteilten Zeitabschnitts;

S5: Auswählen historischer Tagesdaten, die einem Trendähnlichkeitswert entsprechen, der größer ist als ein voreingestellter Referenzwert, um eine Ähnlichkeitssequenzmatrix zu bilden, und

S6: Eingeben der Ähnlichkeitssequenzmatrix in eine konstruierte Extreme Learning Machine (ELM) für das Training, Erfassen eines Vorhersagemodells und Verwenden des Vorhersagemodells zur Vorhersage des Änderungstrends der thermischen Belastung des elektrischen Systems.

2. Verfahren nach Anspruch 1, wobei ein spezifischer Prozess von Schritt S1 Folgendes umfasst:
Entrauschen, Füllen und Normalisieren der historischen Tagesdaten der thermischen Belastung des elektrischen Systems.

3. Verfahren nach Anspruch 1, wobei ein spezifischer Prozess von Schritt S4 Folgendes umfasst:

Berechnen von Ähnlichkeitswerten historischer Tage und eines vorherzusagenden Tags und Auswählen ähnlicher historischer Tage entsprechend Ähnlichkeitswerten, die größer als ein voreingestellter Schwellenwert sind, und

Berechnen eines Trendähnlichkeitswerts ähnlicher historischer Tagesdaten und der Daten-Tagesreferenzlinie jeweils innerhalb eines jeden geteilten Zeitabschnitts.

4. Vorrichtung zur Vorhersage eines Änderungstrends einer thermischen Belastung eines elektrischen Systems durch Vorhersage der thermischen Belastung des elektrischen Systems in den nächsten 24 Stunden, wobei die Vorrichtung Folgendes umfasst: ein Datenverarbeitungsmodul, ein Basisbestimmungsmodul, ein Zeitsegmentierungsmodul, ein Ähnlichkeitsberechnungsmodul, ein Probenselektionsmodul und ein Trainingsmodellmodul, wobei

das Datenverarbeitungsmodul ausgelegt ist, um historische Tagesdaten der thermischen Belastung eines elektrischen Systems vorzuverarbeiten;

das Basisbestimmungsmodul ausgelegt ist, um eine Daten-Tagesreferenzlinie gemäß den vorverarbeiteten historischen Tagesdaten zu erfassen, und das Basisbestimmungsmodul insbesondere ausgelegt ist, um einen Datenmittelwert einer voreingestellten Anzahl von Tagen, die einem vorherzusagenden Tag am nächsten liegen, als Daten-Tagesreferenzlinie heranzuziehen, wobei die voreingestellte Anzahl von Tagen N Tage mit meteorologischen Trendähnlichkeiten zwischen dem vorherzusagenden Tag und den vorausliegenden historischen Tagen ist, N historische Daten zum selben Zeitpunkt vorliegen und der Datenmittelwert für denselben Moment berechnet wird, und wobei N größer als 3 ist;

das Zeitsegmentierungsmodul ausgelegt ist, um die erfasste Daten-Tagesreferenzlinie in mehrere Zeitabschnitte zu teilen, wobei das Zeitsegmentierungsmodul insbesondere ausgelegt ist, um die Daten-Tagesreferenzlinie in mehrere Zeitabschnitte nach Endpunkten in der Daten-Tagesreferenzlinie zu teilen, wobei an einem Tag zwei Höchstwerte und zwei Mindestwerte vorliegen, oder nach Punkten mit einer Differenz zwischen Steigungen von zwei benachbarten Punkten größer als ein voreingestellter Schwellenwert und Endpunkten in der Daten-Tagesreferenzlinie;

das Ähnlichkeitsberechnungsmodul ausgelegt ist, um die historischen Tagesdaten zu selektieren und einen Trendähnlichkeitswert der selektierten historischen Tagesdaten und der Daten-Tagesreferenzlinie jeweils innerhalb eines jeden geteilten Zeitabschnitts zu berechnen;

das Probenselektionsmodul ausgelegt ist, um historische Tagesdaten, die einem Trendähnlichkeitswert entsprechen, der größer ist als ein voreingestellter Referenzwert, auszuwählen, um eine Ähnlichkeitssequenzmatrix zu bilden, und

das Trainingsmodellmodul ausgelegt ist, um die Ähnlichkeitssequenzmatrix in eine konstruierte Extreme Learning Machine (ELM) für das Training einzugeben, ein Vorhersagemodell zu erfassen und das Vorhersagemodell zur Vorhersage des Änderungstrends der thermischen Belastung des elektrischen Systems zu verwenden.

5. Vorrichtung nach Anspruch 4, wobei das Datenverarbeitungsmodul insbesondere ausgelegt ist, um die historischen Tagesdaten der thermischen Belastung des elektrischen Systems zu entrauschen, zu füllen und zu normalisieren.

6. Vorrichtung nach Anspruch 4, wobei das Ähnlichkeitsberechnungsmodul insbesondere ausgelegt ist, um Ähnlichkeitswerte historischer Daten und eines vorherzusagenden Tags zu berechnen, ähnliche historische Tage auszuwählen, die Ähnlichkeitswerten größer als einem voreingestellten Schwellenwert entsprechen, und einen Trendähnlichkeitswert ähnlicher historischer Tagesdaten und der Daten-Tagesreferenzlinie jeweils innerhalb eines jeden geteilten Zeitabschnitts zu berechnen.

**Revendications**

1. Procédé de prédiction d'une tendance de changement d'une charge thermique d'un système électrique par prédiction de la charge thermique du système électrique dans les 24 heures suivantes, dans lequel le procédé comprend :

S1 : le pré-traitement de données quotidiennes historiques de la charge thermique d'un système électrique ;

S2 : l'acquisition d'une ligne de référence quotidienne de données selon les données quotidiennes historiques pré-traitées, prise d'une moyenne de données d'un nombre prédéfini de jours les plus proches d'un jour à prédire comme ligne de référence quotidienne de données, dans lequel le nombre prédéfini de jours est N jours avec des similarités de tendance météorologique entre le jour à prédire et des jours historiques devançant celui-ci, il y a N données historiques à un même moment, et la moyenne de données est calculée pour le même moment, et dans lequel N est supérieur à 3 ;

S3 : la division de la ligne de référence quotidienne de données acquise en de multiples sections temporelles, dans lequel la ligne de référence quotidienne de données est divisée en de multiples sections temporelles selon des points extrêmes dans la ligne de référence quotidienne de données, dans lequel, en un jour, il y a deux valeurs maximales et deux valeurs minimales ; ou selon des points avec une différence entre des pentes de deux points adjacents supérieure à un seuil prédéfini et des points extrêmes dans la ligne de référence quotidienne de données ;

S4 : le criblage des données quotidiennes historiques et le calcul d'une valeur de similarité de tendance des données quotidiennes historiques criblées et de la ligne de référence quotidienne de données à l'intérieur de chaque section temporelle divisée respectivement ;

S5 : le choix de données quotidiennes historiques correspondant à une valeur de similarité de tendance supérieure à une valeur de référence prédéfinie pour former une matrice de séquence de similarité ; et

S6 : l'entrée de la matrice de séquence de similarité dans une machine d'apprentissage extrême construite (ELM) pour l'apprentissage, l'acquisition d'un modèle de prédiction et l'utilisation du modèle de prédiction pour prédire la tendance de changement de la charge thermique du système électrique.

2. Procédé selon la revendication 1, dans lequel un processus spécifique de l'étape S1 comprend : le débruitage, le remplissage et la normalisation des données quotidiennes historiques de la charge thermique du système électrique.

3. Procédé selon la revendication 1, dans lequel un processus spécifique de l'étape S4 comprend : le calcul de valeurs de similarité de jours historiques et d'un jour à prédire, et la sélection de jours historiques similaires correspondant à des valeurs de similarité supérieures à un seuil prédéfini ; et

le calcul d'une valeur de similarité de tendance de données quotidiennes historiques similaires et de la ligne de référence quotidienne de données à l'intérieur de chaque section temporelle divisée respectivement.

4. Dispositif de prédiction d'une tendance de changement d'une charge thermique d'un système électrique par prédiction de la charge thermique du système électrique dans les 24 heures suivantes, dans lequel le dispositif comprend : un module de traitement de données, un module de détermination de ligne de base, un module de segmentation temporelle, un module de calcul de similarité, un module de criblage d'échantillon et un module de modèle d'apprentissage, dans lequel

le module de traitement de données est configuré pour pré-traiter des données quotidiennes historiques de la charge thermique d'un système électrique ;

le module de détermination de ligne de base est configuré pour acquérir une ligne de référence quotidienne de données selon les données quotidiennes historiques pré-traitées, et le module de détermination de ligne de base est particulièrement configuré pour prendre une moyenne de données d'un nombre prédéfini de jours les plus proches d'un jour à prédire comme ligne de référence quotidienne de données, dans lequel le nombre prédéfini de jours est N jours avec des similarités de tendance météorologique entre le jour à prédire et des jours historiques devançant celui-ci, il y a N données historiques à un même moment, et la moyenne de données est calculée pour le même moment, et dans lequel N est supérieur à 3 ;

le module de segmentation temporelle est configuré pour diviser la ligne de référence quotidienne de données acquise en de multiples sections temporelles, dans lequel le module de segmentation temporelle est particulièrement configuré pour diviser la ligne de référence quotidienne de données en de multiples sections temporelles selon des points extrêmes dans la ligne de référence quotidienne de données, dans lequel, en un jour, il y a deux valeurs maximales et deux valeurs minimales ; ou selon des points avec une différence entre des pentes de deux points adjacents supérieure à un seuil prédéfini et des points extrêmes dans la ligne de référence quotidienne de données ;

le module de calcul de similarité est configuré pour cribler les données quotidiennes historiques, et calculer une valeur de similarité de tendance des données quotidiennes historiques criblées et de la ligne de référence quotidienne de données à l'intérieur de chaque section temporelle divisée respectivement ;

le module de criblage d'échantillon est configuré pour choisir des données quotidiennes historiques correspondant à une valeur de similarité de tendance supérieure à une valeur de référence prédéfinie pour former une matrice de séquence de similarité ; et

le module de modèle d'apprentissage est configuré pour entrer la matrice de séquence de similarité dans une machine d'apprentissage extrême construite (ELM) pour l'apprentissage, acquérir un modèle de prédiction et utiliser le modèle de prédiction pour prédire la tendance de changement de la charge thermique du système électrique.

5. Dispositif selon la revendication 4, dans lequel le module de traitement de données est particulièrement configuré pour débruiter, remplir et normaliser les données quotidiennes historiques de la charge thermique du système électrique.

6. Dispositif selon la revendication 4, dans lequel le module de calcul de similarité est particulièrement configuré pour calculer des valeurs de similarité de jours historiques et d'un jour à prédire, sélectionner des jours historiques similaires correspondant à des valeurs de similarité supérieures à un seuil prédéfini, et calculer une valeur de similarité de tendance de données quotidiennes historiques similaires et de la ligne de référence quotidienne de données à l'intérieur de chaque section temporelle divisée respectivement.

| Pre-process historical daily data of the thermal load of an electrical system | —S1 |

↓

| Acquire a data daily reference line according to the pre-processed historical daily data | —S2 |

↓

| Divide the acquired data daily reference line into multiple time sections | —S3 |

↓

| Screen the historical daily data, and calculate a trend similarity value of the screened historical daily data and the data daily reference line within each divided time section respectively | —S4 |

↓

| Choose historical daily data corresponding to a trend similarity value greater than a preset reference value to form a similarity sequence matrix | —S5 |

↓

| Input the similarity sequence matrix into a constructed ELM for training, acquire a prediction model, and predict the thermal load of the electrical system | —S6 |

FIG. 1

FIG. 2

**REFERENCES CITED IN THE DESCRIPTION**

**Patent documents cited in the description**

- US 2012083927 A1

- US 2013110756 A1